# EUROPÄISCHE PATENTSCHRIFT

(11) **EP 1 647 352 B1**
(45) Veröffentlichungstag und Bekanntmachung des Hinweises auf die Patenterteilung: **20.08.2014**
(21) Anmeldenummer: 05022322.1
(22) Anmeldetag: 13.10.2005
(51) Int. Cl.: B23K 35/26, C22C 13/00

(54) **Lotmaterial**
Solder material
Matériau de brasure

(30) Priorität: 16.10.2004 DE 102004050441
(43) Veröffentlichungstag der Anmeldung: 19.04.2006
(73) Patentinhaber: Stannol GmbH, 42283 Wuppertal (DE)
(72) Erfinder: Kruppa, Werner Dr., 45130 Essen (DE)
(74) Vertreter: Mentzel, Norbert

(56) Entgegenhaltungen:
- EP-A- 0 847 829
- WO-A-98/34755
- WO-A-03/061897
- GB-A- 671 079
- US-A- 5 837 191
- PATENT ABSTRACTS OF JAPAN Bd. 007, Nr. 001 (M-183), 6. Januar 1983 (1983-01-06) & JP 57 160594 A (NIHON GENMA:KK), 2. Oktober 1982 (1982-10-02)

## Beschreibung

Die Erfindung betrifft ein Lotmaterial auf der Basis von Zinn oder Zinnlegierungen zum Herstellen einer Lötverbindung zwischen zwei Teilen aus Substratmetallen aus Eisen, Nickel, Kupfer, Silber oder deren Legierungen.

Bekannte Legierungen zum Weichlöten werden in der DIN EN 29453 sowie in der EN 61190-1-3 beschrieben. Diese Weichlotlegierungen besitzen einen Schmelzpunkt, der in der Regel weit unterhalb der zu lötenden metallischen Teile liegt. Beim Weichlöten kommt es durch den Kontakt des schmelzflüssigen Lotes mit dem Substratmetall zu einer Legierungsbildung sowie zur Bildung intermetallischer Phasen, wobei Diffusionsvorgänge eine wesentliche Rolle spielen. Die Legierungsbildung aus Lot und Substratmetall führt zu dem sogenannten Ablegieren des Substratmetalls an der Lotstelle. Insbesondere bei dünnen Substratmetallschichten führt dies zu unerwünschten Veränderungen und Einbußen der Funktionalität dieser Schichten bzw. auch der Lötverbindung. Vorbekannte, bleihaltige Weichlote erzielen zwar gute Lotverbindungen bei geringen Ablegierungsraten, aufgrund der Toxizität von Blei werden diese Weichlote jedoch mehr und mehr durch bleifreie Weichlote ersetzt. Bei der Verwendung von bleifreien Loten ist der Effekt des Ablegierens jedoch wesentlich größer als bei bleihaltigen Loten. Dies hängt einerseits mit den höheren Prozesstemperaturen, aber auch mit verlängerten Prozesszeiten zusammen, die notwendig sind, um gleich gute Benetzungsergebnisse des bleifreien Weichlotes auf den Substratmetallen zu erzielen. Des Weiteren ist das hochzinnhaltige bleifreie Weichlot weit aggressiver als die bekannten bleihaltigen Lote. So löst z.B. reines Zinn, Kupfer bei gleichen Temperaturen etwa viermal so schnell auf, wie übliches Zinn-Bleilot. Solch hohe Auflösungsgeschwindigkeiten bedingen, dass Maschinenteile oder Materialien mit Lötverbindungen unter Verwendung eines solches Weichlotes wesentlich eher geschädigt werden oder gar ihre Funktion einbüßen. Üblicherweise werden Zinn-Weichlote zum Verlöten und Beschichten metallischer Teile aus Kupfer und Kupferlegierungen, Nickel und Nickellegierungen, Eisen und Eisenlegierungen sowie Silberlegierungen verwendet.

In der Vergangenheit wurden daher viele Versuche unternommen, bleifreie Lote durch Erhöhung der Konzentration an solchen Legierungselementen im Weichlot zu verbessern, wie sie im Substratmetall vorhanden sind, beispielsweise Kupfer. Aus der Installationstechnik ist die Anwendung eines Weichlotes aus einer Sn97Cu3-Legierung für Kupferrohre bekannt. Diese übereutektische Legierung enthält demzufolge Kupfer in einer erhöhten Konzentration im Zinn-Weichlot, wodurch ein Herabsetzen der Geschwindigkeit des Ablegierens des Kupfers aus dem Kupferrohr erzielt wird. Dies funktioniert jedoch nur bei entsprechend hohen Löttemperaturen. Solche Bedingungen sind für andere Fügeprozesse, wie z.B. in der Elektronik, nicht anwendbar.

Aus dem Patent US 5,527,628 ist ein bleifreies Lot aus einer eutektischen Zinn-Silber-Kupfer-Legierung, gegebenenfalls mit Anteilen von Wismut und Zink bekannt, die auch für elektronische Bauteilverbindungen eingesetzt werden kann. Ebenfalls eine bleifreie Zinn-Silber-Kupfer-Legierung, in diesem Fall mit Anteilen von Antimon, wird in dem Patent JP 3027441 beschrieben, die zusammen mit einem Flussmittel als Lotpaste für Verbindung von elektronischen Komponenten Anwendung findet.

Aus dem Patent US 5,837,191 ist ein bleifreies Lot aus einer Zinn-Antimon-Silber-Kupfer-Legierung für die Anwendung bei Armaturen und Rohrverbindungen bekannt. Durch die Anteile an Antimon in der bleifreien Legierung werden höhere Festigkeiten möglich.

Des Weiteren wird in der amerikanischen Patentanmeldung US 2004/0141873 A1 ein Weichlot offenbart, das zusammengesetzt ist aus einer Zinn-Silber-Legierung mit Anteilen an Kobalt und Eisen. Diese zwei Legierungselemente Kobalt und Eisen verringern dabei die Aggressivität des Zinns gegenüber dem Eisen der Kontaktflächen der zu verlötenden Eisenteile, des Lotgefäßes oder von Rühraggregaten oder Heizschlangen, die aus diesem Material hergestellt sind und beim Lötprozess verwendet werden. Durch die Korrosion dieser Eisenteile erhöht sich der Schmelzbereich des Weichlotes, was wiederum zu einer größeren Ablegierungsrate führt. Es wird jedoch nur die Anwendung der Legierung für Bauteile aus Eisenwerkstoffen gezeigt.

In der Elektronik sind gelötete Schaltanordnungen Temperaturveränderungen bei den Schaltvorgängen ausgesetzt. Dazu müssen die Lötverbindungen eine ausreichende thermische Ermüdungsfestigkeit besitzen. Ist diese nicht gegeben, kommt es zu einer Vergröberung der Mikrostruktur des Lotmaterials an der Lötstelle und möglicherweise zu Rissbildungen, die den elektrischen Kontakt an der Lötstelle aufheben. Je gröber und duktiler das Lotmaterial ist, umso eher kommt es zu einem Ausfall der Schaltung.

Aus dem Dokument EP 0 847 829 A1 ist ein bleifreies Lot aus einer Zinn-Silber-Kupfer-Legierung bekannt, welche einen Zusatz an Nickel enthalten, wodurch fein verteilte intermetallische Verbindungen SnNi gebildet werden. Diese feinen SnNi-Körner können Temperaturveränderungen besser widerstehen. Die Anteile an Nickel beeinflussen jedoch auch den Schmelzbereich des Lotes, so wird aufgrund der relativ hohen Anteile an Nickel der Schmelzbereich erweitert, was zu einer größeren Ablegierungsrate führt.

Aufgabe der Erfindung ist es daher, ein verbessertes Lotmaterial für die Fügetechnik in der Elektronik bereitzustellen, welches im Anwendungsfall zu einer geringeren Ablegierungsrate führt. Diese Aufgabe wird mit einem Lotmaterial mit den Merkmalen des Anspruches 1 gelöst.

Die zu beschichtenden und verlötenden Teile sind üblicherweise aus den folgenden Substratmetallen: Kupfer und Kupferlegierung, Nickel und Nickellegierung, Eisen und Eisenlegierung sowie Silberlegierungen. Voraussetzung für die Verlötbarkeit dieser Substratmetalle ist eine gute Benetzbarkeit der metallischen Oberflächen der Teile mit dem schmelzflüssigen Weichlotmaterial. Für das erfindungsgemäße Lotmaterial wird als Basis Zinn, eine Zinn-Silber-Legierung, eine Zinn-Kupfer-Legierung, eine Zinn-Silber-Kupfer-Legierung oder einer der vorgenannten Basiswerkstoffe mit Gewichtsanteilen an Antimon eingesetzt. Einem solchen Weichlotvormaterial, das nachfolgend als Basislegierung bezeichnet wird, werden Legierungskomponenten, die mit dem Substratmetall intermetallische Verbindungen eingehen und noch nicht in der Basislegierung vorhanden sind, zugesetzt. Dies führt bei Anwendung des entstehenden Weichlotmaterials dazu, dass Ablegierungsreaktionen zurückgedrängt werden. Darüber hinaus wurde festgestellt, dass aufgrund der unbegrenzten Mischbarkeit der Elemente, Eisen, Kobalt und Nickel untereinander, diese Metalle auch gemeinsam im Lot eingesetzt werden können, wo sich die Wirkung der einzelnen Elemente addiert. Andererseits ist es auch möglich, nur eins dieser Elemente mit entsprechend größerem Gewichtsanteil in der Weichlotlegierung vorzusehen. Bei den früher eingesetzten Zinn-Blei-Weichloten wurden die Anteile an diesen Elementen, Eisen, Nickel, Kobalt, immer möglichst niedrig gehalten. Diese Elemente wurden als unerwünschte Verunreinigung angesehen, die den Lotprozess stören. Bei Zugabe dieser Elemente zu den vorgenannten Basislegierungen ist ein Gesamtgewichtsanteil bis 1 Gew% jedoch unkritisch. Bevorzugt werden jedoch Zugaben bis insgesamt 0,25 Gew%. Besonders bevorzugt sind Weichlotlegierungen mit:
0,001 bis 0,05 Gew% Eisen und 0,001 bis 0,15 Gew% Nickel oder
0,001 bis 0,05 Gew% Eisen und 0,001 bis 0,15 Gew% Kobalt oder
0,001 bis 0,2 Gew% Kobalt und 0,001 bis 0,05 Gew% Nickel.

Dieser dosierte Zusatz an Eisen, Kobalt und/oder Nickel bringt den Effekt hervor, dass sich die Ablegierungsraten reduzieren. Diese Dosierungen haben jedoch keinen Einfluss auf die physikalischen Eigenschaften des Weichlots, d.h. die Dichte, der Schmelzpunkt und die Kristallstruktur bleiben unverändert. Ebenso wird die Benetzungsfähigkeit des Weichlotes nicht beeinträchtigt. Es ergibt sich beim Beschichten der zu verlötenden Teile eine gleichmäßige Oberfläche auf den Substratmetallen.

Darüber hinaus wird durch die Zulegierung von Legierungsmetallen aus der Gruppe der Seltenen Erden, wie beispielsweise Cer, Lanthan oder Neodym, eine Kornfeinerung des Weichlotes erzielt. Diese Kornfeinerung wird in dem gleichmäßigen Aussehen der metallischen Oberfläche der Beschichtung und der Oberflächen der Lötstellen sichtbar. Diese feinere Mikrostruktur führt dazu, dass in der Lotverbindung Rekristallisationsvorgänge bzw. Materialvergröberungen durch thermische Beeinflussung verzögert werden. Dies ermöglicht in vorteilhafter Weise den Einsatz des erfindungsgemäßen Lotmaterials als mikrodosiertes Lot für Weichlötaufgaben in der Elektronik, der Elektrotechnik und Feinwerktechnik und dies unter, im Vergleich zum Stand der Technik, gleichen und sogar günstigeren Bedingungen.

Bei einer bevorzugten Ausführungsvariante erfolgt die Zugabe an Seltenen Erden über ein sogenanntes Mischmetall. Darunter wird eine Legierung verstanden, die als Hauptbestandteile Cer, Lanthan und Neodym enthält und etwa 3 Gew% Eisen. Ein handelsübliches Mischmetall enthält neben den 3 Gew% Eisen, 45 Gew% Cer, 45 Gew% Lanthan und 5 Gew% Neodym. Den Rest bilden unvermeidbare Verunreinigungen. Dieses Mischmetall wird in Gewichtsanteilen von 0,001 bis 0,05 Gew%, vorzugsweise zusammen mit 0,001 bis 0,1 Gew.% Kobalt einer der vorgenannten Basislegierungen zugesetzt.

Verschiedene Untersuchungen haben ergeben, dass folgende Gewichtsverhältnisse in dem Lotmaterial von Vorteil sind, nämlich:
Eisen zu Nickel 1:1 1 bis 1:3
Eisen zu Kobalt 1:1 bis 1:4
Kobalt zu Nickel 1:1 bis 5:1
Mischmetall zu Kobalt 1:1 bis 1:4.

Für Lotaufgaben in der Elektronik, wo sich auf den Bauteiloberflächen Silbermetallisierungen u.a. mit Platin und/ oder Palladium-Anteilen befinden, hat sich eine zusätzliche Zulegierung von Palladium und/ oder Platin in Gewichtsanteilen von 0,001 bis 0,1 Gew% zu einem der vorgenannten Weichlotlegierungen als günstig herausgestellt.

Nachfolgend werden erprobte Ausführungsvarianten von Lotmitteln aufgeführt, die zu dauerhaft zuverlässigen Lötstellen geführt haben. Diese Lotbäder oder Lotpasten enthalten erfindungsgemäße Lotmaterialien der Zusammensetzung:
Sn Cu 0,7 Ce 0,03 Co 0,08 Ni 0,02 Pd 0,004 (Lotbad)
Sn Ag 3,7 Cu 0,6 La 0,04 Fe 0,02 Ni 0,04 Pt 0,005 (Lotpaste)
Sn Ag 3,6 Cu 0,6 La 0,04 Fe 0,01 Co 0,04 Pd 0,01 (Lotpaste)
Sn Ag 3,5 MM* 0,05 Co 0,08 Pd 0,005 (Lotpaste)
   *) Mischmetall.

Darüber hinaus hat sich die Legierung Sn Cu3 Ce 0,01 Co 0,1 Ni 0,1 für Hochtemperaturanwendungen als gut tauglich erwiesen.

Weitere Ausführungsvarianten von Lotmitteln enthalten zusätzlich 0,001 bis 0,01 Gew% Phosphor, welches als Desoxidationsmittel dient.

Die erfindungsgemäßen Lotmaterialien können in Form von Barren, Stangen oder Pulver vorliegen, um daraus beispielsweise ein Lötbad herzustellen. Aus den Lotmaterialien können auch massive oder flussmittelgefüllte Drähte hergestellt werden. Für besondere Anwendungen sind diese Lotmaterialien in Form einer Folie oder als Formteil herstellbar. Eine Applikation des erfindungsgemäßen Lotmaterials als Lotpaste ist ebenfalls möglich. Unter diesen Voraussetzungen lassen sich Lötverbindungen für Teile aus Substratmetallen, wie beispielsweise Eisen, Nickel, Kupfer oder deren Legierungen sowie Silberlegierungen herstellen, in dem die metallischen Flächen der Substratmetalle mit dem Lotmaterial beschichtet werden. Solche metallischen Flächen können Oberflächen von Leiterplatten, metallische Anschlussflächen an elektrischen, elektronischen oder mechanisch funktionellen Bauteilen sowie anderweitige Kontaktflächen sein. Auch lassen sich Lötverbindungen herstellen, wenn die Teile aus Substratmetall Drähte, Litzen, Ösen oder Kabelschuhe sind.

### Ausführungsbeispiel:

Die Herstellung des Lotmaterials kann auf verschiedene Weise erfolgen, nämlich aus den Reinmetallen oder unter Zuhilfenahme von Vorlegierungen.

Es gibt wenig Probleme Zinn-Silber-, Zinn-Kupfer- oder Zinn-Silber-Kupfer-Legierungen aus Reinmetallen im Produktionsmaßstab herzustellen, weil die Löslichkeit geringer Mengen an Silber und/oder Kupfer in reinem Zinn bei Temperaturen bis 400° schon relativ hoch ist. Anders ist dies jedoch, wenn man Eisen, Cobalt, Nickel oder Elemente der seltenen Erden zulegieren will, deren Lösungsgeschwindigkeit in einer Zinnschmelze relativ gering ist. Für akzeptable Lösungsgeschwindigkeiten benötigt man erheblich höhere Temperaturen. Daher werden bei der Herstellung der erfindungsgemäßen Lötlegierungen günstiger Weise Vorlegierungen verwendet.

Aus den reinen Metallen (99,9 Gew%) Eisen, Cobalt, Nickel und Cer wurden jeweils separat mit Reinzinn bei ca. 800° folgende Vorlegierungen hergestellt:
Sn 99,8 Fe 0,2
Sn 99,2 Co 0,8
Sn 99,2 Ni 0,8
Sn 99,7 Ce 0,3.

Als ungünstig haben sich höhere Gehalte der Legierungskomponenten erwiesen, denn es besteht die Gefahr, dass die sich bildenden intermetallischen Phasen beim Abkühlen und Erstarren zu sehr separieren. Diese sogenannten. Seigerungen führen dann zu Inhomogenitäten in der Vorlegierung. Die Vorlegierungen werden zur weiteren Verwendung in Dreikantstangen oder Flachstangen abgegossen. Diese Dreikant- oder Flachstangen sind geeignete Formen, um genaue Dosierungen für die Ziellegierungen vorzunehmen.

Beispielhaft wird nachfolgend die Herstellung von 1000 kg eines SnCu-Lotmaterials hergestellt:
Zunächst wird die Basislegierung aus 899,13 kg Zinn und 6,50 kg Kupfer wie üblich hergestellt. Anschließend werden

| | |
|---|---|
| 28,13 kg | Sn 99,2 Ni 0,8-Legierung |
| 56,25 kg | Sn 99,2 Co 0,8-Legierung und |
| 10,00 kg | Sn 99,7 Ce 0,3-Legierung |

zugegeben, eingeschmolzen und auf 500° temperiert. Nach einer halbstündigen Ruhepause wird gerührt und die Schmelze auf 430° abgekühlt. Nach Abtragen der entstandenen Asche erfolgt die Probenentnahme für die Analyse und der Abguss in 1kg-Stangen.

Die Analyse des obigen Ansatzes mittels eines Funkenspektrometers ergab folgende Zusammensetzung in Gew%:

| | | | |
|---|---|---|---|
| Cu: | 0,62 | Pb: | 0,031 |
| Ag: | 0,0061 | Sb: | 0,017 |
| Co: | 0,048 | Au: | < 0,001 |
| Ni: | 0,026 | Al: | < 0,001 |
| Ce: | 0,003 | Cd: | < 0,001 |
| Fe : | 0,018 | Zn: | < 0,001 |
| Bi : | 0,0075 | As : | 0,0052 |
| In: | 0,0024 | Sn: | Rest |

Die Herstellung anderer erfindungsgemäßer Legierungen kann auf analoge Weise vorgenommen werden.

### Ablegierungsversuche:

Bleifreie Lotlegierungen haben aufgrund des hohen Zinngehaltes und der höheren Arbeitstemperaturen beim Löten höhere Ablegierungsraten als bleihaltige Lote. Das Ablegieren ist insbesondere beim Weichlöten dünner Schichten in der Elektronik zu beachten. Das meistbenutzte Material für Leiterbahnen auf Leiterplatten ist Kupfer. Das Ablegieren des Kupfers bedeutet eine Veränderung der Lötstelle, die durch Reaktion zwischen Zinn und Kupfer verursacht ist. Neben den zu lötenden Substraten werden auch Lötwerkzeuge, die mit dem heißen Lot in Kontakt kommen, von den zinnhaltigen Legierungen angegriffen. Die Folgen sind Lochfraß und letztendlich die Zerstörung der Geräte.

Ablegierungsversuche mit erfindungsgemäßen Lotmaterial wurden an Kupfer- und Nickelsubstratmetallen vorgenommen. Dazu wurde der Kupfer- bzw. Nickelwerkstoff bei hoher Temperatur in das flüssige Lot getaucht. Damit das Lot den Werkstoff gut benetzt, wurde ein Flussmittel eingesetzt.

Die Tabelle 1 zeigt Ablegierungsraten von bekannten Loten (Nr. 1 bis 6) und erfindungsgemäßen Loten (Nr. 7 bis 12), wobei jeweils für ein erfindungsgemäßes Lot ein Lot der gleichen Basislegierung zum Vergleich herangezogen wurde.

Deutlich sind die wesentlich geringeren Ablegierungsraten für Nr. 7 bis 12 im Vergleich zu Nr. 1 bis 6.

Den größten Unterschied findet man bei den Zinn-Silber-Kupfer-Legierungen (Nr. 8, 9 bzw. Nr. 2, 3). Die Ablegierung bei höheren Temperaturen (400° C) ist wesentlich höher, aber auch hier zeigt sich die vorteilhafte Reduzierung der Ablegierung bei Nr. 12 im Vergleich zu Nr. 6.

**Tabelle 1: Vergleich von Ablegierungsraten:**

| Nr. | Lotlegierungen | Ablegierungsraten in µm/s | Verzögerungsfaktor | Temperatur |
|---|---|---|---|---|
| 1. | Sn 96 Ag 4 | 0,57 | 1 | 300° C |
| 2. | Sn 96,5 Ag 3,0 Cu 0,5 | 0,67 | 1 | 300° C |
| 3. | Su 95 Ag 3,8 Cu 0,7 | 0,39 | 1 | 300° C |
| 4. | Su 99 Cu 0,7 | 0,35 | 1 | 300° C |
| 5. | Su 97 Cu 0,3 | 0,14 | 1 | 300° C |
| 6. | Sn 97 Cu 0,3 | 1,15 | 1 | 400° C |
| 7. | Su 96 Ag 4 Co 0,045 Ni 0,02 Ce 0,003 | 0,28 | 2,03 | 300° C |
| 8. | Su 96,5 Ag 3,0 Cu 0,5 Co 0,045 Ni 0,02 Ce 0,003 | 0,23 | 2,85 | 300° C |
| 9. | Sn 95 Ag 3,8 Cu 0,7 Co 0,045 Ni 0,02 Ce 0,003 | 0,12 | 3,25 | 300° C |
| 10. | Sn 99 Cu 0,7 Co 0.045 Ni 0,02 Ce 0,003 | 0,18 | 1,96 | 300° C |
| 11. | Sn 97 Cu 0,3 Co 0,045 Ni 0,02 Ce 0,003 | 0,05 | 3,00 | 300° C |
| 12. | Sn 97 Cu 0,3 Co 0,045 Ni 0,02 Ce 0,003 | 0,51 | 2,25 | 400°C |

Die Ablegierungsrate von Kupfer ist in den verwendeten erfindungsgemäßen Loten etwa halb so groß, wie bei den vergleichbaren bekannten Loten. Daher ist es möglich auch mit bleifreien Legierungen dünne Schichten oder dünne Kabel zu löten.

Die Ablegierung von Nickel war mit gleicher Methode nicht zu ermitteln, da die Ablegierungsraten unter 10 µm/Stunde lagen.

Die erfindungsgemäßen Lotmaterialien zeigen drastisch reduzierte Ablegierungsraten gegenüber bekannten bleifreien Loten, so dass sich Metallisierungen auf Bauteilen und Leiterplatten nicht so schnell auflösen und die Lebensdauer der Lötgeräte verlängert wird.

## Patentansprüche

1. Lotmaterial mit geringen Ablegierungsraten zum Herstellen einer Lötverbindung bei elektrischen und/ oder elektronischen Bauteilen, wobei das Lotmaterial eine Zusammensetzung von
| | |
|---|---|
| 0,2 bis 5 Gew% | Silber und/ oder Kupfer, |
| 0,001 bis 0.25 Gew% | Cobalt oder mindestens zwei Elemente ausgewählt aus der Gruppe Eisen, Cobalt, Nickel, |
| 0,001 bis 0,5 Gew% | einer Komponente, ausgewählt aus der Gruppe der Seltenen Erden, |
kein oder
| | |
|---|---|
| 0,001 bis 0,1 Gew% | Palladium oder Platin, |
kein oder
| | |
|---|---|
| 0,001 - 0,01 Gew% | Phosphor, Rest Zinn und übliche Verunreinigungen |
aufweist.

2. Lotmaterial nach Anspruch 1, **dadurch gekennzeichnet, dass** das Lotmaterial 0,001 bis 0,05 Gew% Eisen und 0,001 bis 0,15 Gew% Nickel enthält.

3. Lotmaterial nach Anspruch 2, **dadurch gekennzeichnet, dass** das Lotmaterial Eisen und Nickel im Verhältnis 1:1 1 bis 1:3 enthält.

4. Lotmaterial nach Anspruch 1, **dadurch gekennzeichnet, dass** das Lotmaterial 0,001 bis 0,05 Gew% Eisen und 0,001 bis 0,15 Gew% Cobalt enthält.

5. Lotmaterial nach Anspruch 4, **dadurch gekennzeichnet, dass** das Lotmaterial Eisen und Cobalt im Verhältnis 1:1 bis 1:4 enthält.

6. Lotmaterial nach Anspruch 1, **dadurch gekennzeichnet, dass** das Lotmaterial 0,001 bis 0,2 Gew% Cobalt und 0,001 bis 0,05 Gew% Nickel enthält.

7. Lotmaterial nach Anspruch 6, **dadurch gekennzeichnet, dass** das Lotmaterial Cobalt und Nickel im Verhältnis 1:1 bis 5:1 enthält.

8. Lotmaterial nach Anspruch 1, **dadurch gekennzeichnet, dass** das Lotmaterial 0,001 bis 0,2 Gew% Cobalt enthält.

9. Lotmaterial nach einem der Ansprüche 1 bis 8, **dadurch gekennzeichnet, dass** das Lotmaterial 0,001 bis 0,05 Gew% wenigstens einer Legierungkomponente, ausgewählt aus der Gruppe der Seltenen Erden enthält, vorzugsweise Cer und/ oder Lanthan und / oder Neodym.

10. Lotmaterial nach einem der Ansprüche 1 bis 9, **dadurch gekennzeichnet, dass** es in Form von Barren oder Stangen oder als Pulver oder als massiver Draht oder als flussmittelgefüllter Draht oder als Folie oder als Formteil oder als Lotpaste vorliegt.

11. Verwendung des Lotmaterials nach einem der Ansprüche 1 bis 10 für Lötverbindung zwischen zwei Teilen aus gleichen oder unterschiedlichen Substratmetallen, enthaltend als Hauptkomponente Eisen oder Nickel oder Kupfer.

12. Verwendung eines Lotmaterials nach Anspruch 1 mit Palladium oder Platin in der Zusammensetzung für Lötverbindung zwischen zwei Teilen aus Silber enthaltenden Substratmetallen.

13. Verwendung des Lotmaterials nach einem der Ansprüche 1 bis 10 für Lötverbindungen, **dadurch gekennzeichnet, dass** die Teile aus Substratmetall metallische Flächen auf Leiterplatten oder metallische Anschlussflächen an elektrischen, elektronischen sowie mechanisch funktionellen Bauteilen oder anderweitige Kontaktflächen sind.

14. Verwendung des Lotmaterials nach einem der Ansprüche 1 bis 10 für Lötverbindungen, **dadurch gekennzeichnet, dass** die Teile aus Substratmetall Drähte, Litzen, Ösen oder Kabelschuhe sind.

15. Verfahren zur Herstellung eines Lotmaterials nach Anspruch 1, **dadurch gekennzeichnet, dass** als Basis für das Lotmaterial Zinn oder eine Zinnlegierung eingesetzt wird und Legierungskomponenten in Form von Metallen oder Mischmetallen zugesetzt werden bis zu einer Zusammensetzung:
| | |
|---|---|
| 0,2 bis 5 Gew% | Silber und/ oder Kupfer, |
| 0,001 bis 0.25 Gew% | Cobalt oder mindestens zwei Elemente ausgewählt aus der Gruppe Eisen, Cobalt, Nickel, |
| 0,001 bis 0,5 Gew% | einer Komponente, ausgewählt aus der Gruppe der Seltenen Erden, |
kein oder
| | |
|---|---|
| 0,001 bis 0,1 Gew% | Palladium oder Platin, |
kein oder
| | |
|---|---|
| 0,001 - 0,01 Gew% | Phosphor, Rest Zinn und übliche Verunreinigungen. |

16. Verfahren nach Anspruch 15, **dadurch gekennzeichnet, dass** Seltene Erden in Form von Mischmetall zugesetzt werden, vorzugsweise 0,001 bis 0,05 Gew% Mischmetall, wobei das Mischmetall eine Legierung aus 3 Gew% Eisen und 45 Gew% Cer und 45 Gew% Lanthan und 5 Gew% Neodym und Rest andere Seltene Erden sowie unvermeidbare Verunreinigungen ist.

17. Verfahren nach Anspruch 16, **dadurch gekennzeichnet, dass** 0,001 bis 0,1 Gew% Cobalt zugesetzt werden und ein Verhältnis von Mischmetall zu Cobalt von 1:1 bis 1:4 eingestellt wird.

## Claims

1. Soldering material with low rates of dissolution to establish a solder connection for electrical and/or electronic components, whereby, the soldering material features a compound of
| | |
|---|---|
| 0.2 to 5% weight | silver and/or copper, |
| 0.001 to 0.25% weight | cobalt or a minimum of two elements selected from the group iron, cobalt, nickel, |
| 0.001 to 0.5% weight | of a component selected from the group of the seldom earths |
no or
| | |
|---|---|
| 0.001 to 0.1 % weight | palladium or platinum, |
no or
| | |
|---|---|
| 0.001 to 0.01% weight | phosphorous, rest tin and usual contamination |

2. Soldering material according to claim 1, **characterized in that** the soldering material contains 0.001 to 0.05% weight of iron and 0.001 to 0.15% weight of nickel.

3. Soldering material according to claim 2, **characterized in that** the soldering material contains iron and nickel in a ratio of 1:1 to 1:3.

4. Soldering material according to claim 1, **characterized in that** the soldering material contains 0.001 to 0.05% weight of iron and 0.001 to 0.15% weight of cobalt.

5. Soldering material according to claim 4, **characterized in that** the soldering material contains iron and cobalt in a ratio of 1:1 to 1:4.

6. Soldering material according to claim 1, **characterized in that** the soldering material contains 0.001 to 0.2% weight of cobalt and 0.001 to 0.05% weight of nickel.

7. Soldering material according to claim 6, **characterized in that** the soldering material contains cobalt and nickel in a ratio of 1:1 to 5:1.

8. Soldering material according to claim 1, **characterized in that** the soldering material contains 0.001 to 0.2% weight of cobalt.

9. Soldering material according to claims 1 to 8, **characterized in that** the soldering material contains 0.001 to 0.05% weight of a minimum of one alloying components selected from the group of seldom earths preferably cerium and/or lanthanum and/or neodymium.

10. Soldering material according to claims 1 to 9, **characterized in that** it is present in the form of ingots or rods or a powder or as solid wire or as wire filled with liquid or as film or as a formed part or as soldering paste.

11. Using the soldering material according to one of the claims 1 to 10 for solder connection between two parts of the same or different substrate metals, contained as the main components iron or nickel or copper.

12. Using the soldering material according to claim 1 with palladium or platinum as a solder connection two parts made from substrate metals containing silver.

13. Using the soldering material according to one of the claims 1 to 10 for solder connections **characterized in that** the parts made from substrate metal are metallic surfaces on printed circuit boards or metallic connection surfaces on electrical, electronic and mechanical functional components or other contact surfaces.

14. Using the soldering material according to one of the claims 1 to 10 for solder connections **characterized in that** the parts made from substrate metal are wires, strands, terminal lugs or cable shoes.

15. Procedure to establish a solder connection according to claim 1, **characterized in that** the basis for the soldering material is inserted in tin or tin alloy and alloying components are added in the form of metals or composition metals, up to a compound of:
| | |
|---|---|
| 0.2 to 5% weight | silver and/or copper, |
| 0.001 to 0.25% weight | cobalt or a minimum of two elements selected from the group iron, cobalt, nickel, |
| 0.001 to 0.5% weight | of a component selected from the group of the seldom earths |
no or
| | |
|---|---|
| 0.001 to 0.1 % weight | palladium or platinum, |
no or
| | |
|---|---|
| 0.001 to 0.01% weight | phosphorous, rest tin and usual contamination. |

16. Procedure according to claim 15, **characterized in that** the seldom earths are added in the form of composition metal, preferably 0.001 to 0.05% weight of composition metal, whereby, composition metal is an alloy of 3% weight iron and 45% weight cerium and 45% weight lanthanum and 5% weight neodymium and the rest other seldom earths and unavoidable contamination.

17. Procedure according to claim 16, **characterized in that** 0.001 to 0.1 % weight cobalt is added and a ratio of composition metal to cobalt is set at from 1:1 to 1:4.

## Revendications

1. Matériau de brasure contenant des taux d'alliage réduits, destiné à réaliser une jonction brasée avec des composants électriques et/ou électroniques, sachant que le matériau de brasure se compose de
| | |
|---|---|
| 0,2 à 5 % pondéraux | d'argent et/ou de cuivre, |
| 0,001 à 0,25 % pondéraux | de cobalt ou d'au moins deux éléments choisis dans le groupe fer, cobalt, nickel, |
| 0,001 à 0,5 % pondéraux | d'un composant choisi dans le groupe des terres rares, |
pas
ou de
| | |
|---|---|
| 0,001 à 0,1 % pondéraux | de palladium ou de platine, |
pas
ou de
| | |
|---|---|
| 0,001 à 0,01 % pondéraux | de phosphore, et pour le reste d'étain et d'impuretés habituelles. |

2. Matériau de brasure selon la revendication 1, **caractérisé en ce que** le matériau de brasure contient entre 0,001 et 0,05 % pondéraux de fer et entre 0,001 et 0,15 % pondéraux de nickel.

3. Matériau de brasure selon la revendication 2, **caractérisé en ce que** le matériau de brasure contient du fer et du nickel dans des proportions comprises entre 1:1 et 1:3.

4. Matériau de brasure selon la revendication 1, **caractérisé en ce que** le matériau de brasure contient entre 0,001 et 0,05 % pondéraux de fer et entre 0,001 et 0,15 % pondéraux de cobalt.

5. Matériau de brasure selon la revendication 4, **caractérisé en ce que** le matériau de brasure contient du fer et du cobalt dans des proportions comprises entre 1:1 et 1:4.

6. Matériau de brasure selon la revendication 1, **caractérisé en ce que** le matériau de brasure contient entre 0,001 et 0,2 % pondéraux de cobalt, et entre 0,001 et 0,05 % pondéraux de nickel.

7. Matériau de brasure selon la revendication 6, **caractérisé en ce que** le matériau de brasure contient du cobalt et du nickel dans des proportions comprises entre 1:1 et 5:1.

8. Matériau de brasure selon la revendication 1, **caractérisé en ce que** matériau de brasure contient entre 0,001 et 0,2 % pondéraux de cobalt.

9. Matériau de brasure selon l'une des revendications 1 à 8, **caractérisé en ce que** le matériau de brasure contient entre 0,001 et 0,05 % pondéraux d'au moins un composant d'alliage choisi dans le groupe des terres rares, de préférence du cérium et/ou du lanthane et/ou du néodyme.

10. Matériau de brasure selon l'une des revendications 1 à 9, **caractérisé en ce qu'**il est disponible sous forme de barres ou de tiges ou de poudre ou de fil massif ou de fil rempli de fondant, ou de feuille ou de pièce moulée ou comme pâte à braser.

11. Utilisation du matériau de brasure selon l'une des revendications 1 à 10, pour réaliser une jonction brasée entre deux pièces composées de substrats métalliques identiques ou différents, contenant comme composant principal du fer ou du nickel ou du cuivre.

12. Utilisation d'un matériau de brasure selon la revendication 1 contenant du palladium ou du platine en composition requise pour réaliser une jonction brasée entre deux pièces composées de substrats métalliques contenant de l'argent.

13. Utilisation du matériau de brasure selon l'une des revendications 1 à 10 pour réaliser des jonctions brasées, **caractérisée en ce que** les pièces en substrat métallique sont des surfaces métalliques sur des cartes électroniques ou des surfaces de raccordement métalliques sur des composants électriques, électroniques ainsi que des composants à fonctions mécaniques, ou d'autres surfaces de contact.

14. Utilisation du matériau de brasure selon l'une des revendications 1 à 10 pour réaliser des jonctions brasées, **caractérisée en ce que** les pièces en substrat métallique sont des fils, des torons, des oeillets ou des cosses de câbles.

15. Procédé pour fabriquer un matériau de brasure selon la revendication 1, **caractérisé en ce que** de l'étain ou un alliage étamé sert comme base du matériau de brasure, et que les composants d'alliage sont ajoutés sous forme de métaux ou de métaux mixtes jusqu'à obtenir la composition suivante :
| | |
|---|---|
| 0,2 à 5 % pondéraux | d'argent et/ou de cuivre, |
| 0,001 à 0,25 % pondéraux | de cobalt ou d'au moins deux éléments choisis dans le groupe fer, cobalt, nickel, |
| 0,001 à 0,5 % pondéraux | d'un composant choisi dans le groupe des terres rares, |
pas
ou de
| | |
|---|---|
| 0,001 à 0,1 % pondéraux | de palladium ou de platine, |
pas
ou de
| | |
|---|---|
| 0,001 à 0,01 % pondéraux | de phosphore, reste étain et impuretés habituelles. |

16. Procédé selon la revendication 15, **caractérisé en ce que** les terres rares sont ajoutées sous forme de métal mixte, de préférence entre 0,001 et 0,05 % pondéraux de métal mixte, sachant que le métal mixte est un alliage composé de 3 % pondéraux de fer, de 45 % pondéraux de cérium, de 45 % pondéraux de lanthane et de 5 % pondéraux de néodyme, le reste étant composé de terres rares ainsi que d'impuretés inévitables.

17. Procédé selon la revendication 16, **caractérisé en ce que** sont ajoutés entre 0,001 et 0,1 % pondéraux de Cobalt et que les proportions entre le métal mixte et le cobalt sont ajustées entre 1:1 et 1:4.
